# EUROPÄISCHE PATENTSCHRIFT

(11) **EP 1 163 122 B1**
(45) Veröffentlichungstag und Bekanntmachung des Hinweises auf die Patenterteilung: **27.11.2002**
(21) Anmeldenummer: 00920391.0
(22) Anmeldetag: 14.03.2000
(51) Int. Cl.: B60K 15/077

(54) **KRAFTSTOFFTANK FÜR EIN KRAFTFAHRZEUG**
FUEL TANK FOR A MOTOR VEHICLE
RESERVOIR A CARBURANT POUR UN VEHICULE

(30) Priorität: 20.03.1999 DE 19912642
(43) Veröffentlichungstag der Anmeldung: 19.12.2001
(73) Patentinhaber: Kautex Textron GmbH & Co. KG., 53229 Bonn (DE)
(72) Erfinder: WALTER, Rüdiger, D-53123 Bonn (DE)
(74) Vertreter: Patentanwälte Lippert, Stachow, Schmidt & Partner
(86) Internationale Anmeldenummer: DE0000790
(87) Internationale Veröffentlichungsnummer: WO00056564

(56) Entgegenhaltungen:
- EP-A- 0 629 522
- EP-A- 0 803 394
- EP-A- 0 922 603
- DE-A- 19 600 872
- DE-A- 19 605 703

## Beschreibung

Die Erfindung betrifft einen Kraftstofftank für ein Kraftfahrzeug gemäß dem Oberbegriff des Anspruches 1.

Insbesondere bei den heute üblichen einstückigen Kraftstofftanks aus thermoplastischem Kunststoff unterliegt die Größe des Reservoirs, welches im allgemeinen auch die Kraftstoffpumpe für die Versorgung des Motors enthält, gewissen Einschränkungen. Dies ist darauf zurückzuführen, daß das Reservoir entweder nachträglich durch eine Öffnung in der Wandung des Kraftstofftankes in diesen eingebracht wird oder aber bereits während des Herstellungsvorganges in den Vorformling eingebracht wird, aus welchem der Kraftstofftank geformt wird. Im ersten Fall bestimmen die Abmessungen der Öffnung in der Wandung des Tankes, die nicht beliebig groß gewählt werden können, die Größe und damit das Fassungsvermögen des Reservoirs. Im zweiten Fall ergeben sich Beschränkungen für die Größe des Reservoirs aus fertigungstechnischen Gründen und insbesondere auch aus den Querschnittsabmessungen des im allgemeinen mittels Extrusion hergestellten Vorformlings, der in einer Blasform durch inneren Überdruck zum Tank aufgeweitet wird.

Andererseits können extreme Fahrzustände des Kraftfahrzeuges, beispielsweise aufgrund extremer Schräglage oder sehr hoher Zentrifugalkräfte bei Kurvenfahrt, dazu führen, daß eine gegebenenfalls große Kraftstoffentnahme pro Zeiteinheit ausschließlich aus dem Reservoir stattfindet, wobei sichergestellt sein muß, daß auch unter diesen Bedingungen immer eine ausreichende Flüssigkeitsmenge innerhalb des Reservoirs in der Nähe der Ansaugöffnung der Kraftstoffpumpe vorhanden ist.

In vielen Fällen wird es daher als notwendig angesehen, daß das Reservoir ein Füllvolumen von wenigstens zwei Litern aufweist, um beispielsweise bei Geländewagen unter allen praktisch in Betracht kommenden Betriebsbedingungen eine ausreichend große Kraftstoffmenge im Ansaugbereich der Kraftstoffpumpe über einen längeren Zeitraum zu halten. Dabei ist zu berücksichtigen, dass bei bestimmten Betriebsbedingungen, z. B. bei Schräglage des Fahrzeugs, die Tendenz besteht, dass der Kraftstoff in den in der jeweiligen Schräglage zuunterst befindlichen Bereich des Reservoirs fließt und sich dort sammelt, so dass auch bei einem größeren Reservoir unter Umständen kein Kraftstoff mehr im Ansaugbereich der Kraftstoffpumpe vorhanden ist.

Aus der gattungsbilden den EP 0803394 A1 ist ein Kraftstoffbehälter für ein Kfz bekannt, bei welchem das Reservoir bzw. der Schwalltopf in mehrere kreissegmentförmige Innenabschnitte aufgeteilt ist.

Aus der DE 19600827 A1 ist ein Kraftstoffbehälter bekannt, dessen Kraftstofffördereinrichtung in den Kraftstoffbehälter bereits während dessen Herstellungsprozess eingebracht und einstückig von dem aus Kunststoff bestehenden Kraftstoffbehälter umgeben ist. Die Kraftstofffördereinrichtung umfasst in bekannter Art und Weise das die Kraftstoffförderpumpe umgebende Reservoir.

Aus der DE 19605703 A1 ist ein Behältersystem für Betriebsmittel von Lastkraftwagen und Omnibussen bekannt, das aus mehreren kommunizierend miteinander verbundenen kanisterförmigen Einzelbehältern besteht.

Aus der EP 0629522 A1 ist schließlich eine Brennstofffördereinrichtung oder Kraftstofffördereinrichtung bekannt, die in mehrere Schlingerkammern unterteilt ist.

Demzufolge liegt der Erfindung die Aufgabe zugrunde, einen Kraftstofftank der einleitend beschriebenen Art so auszubilden, dass auch dann, wenn das Tankinnere nur beschränkt zugänglich ist, ein Reservoir vorgesehen sein kann, das ausreichend groß ist, um bei allen im praktischen Betrieb in Betracht kommenden Fahrzuständen das Vorhandensein einer ausreichend großen Menge Kraftstoff im Reservoir im Ansaugbereich der Pumpe zu gewährleisten.

Dieses Problem wird erfindungsgemäß durch einen Kraftstofftank mit den Merkmalen des Anspruches 1 gelöst. Es ist aber auch möglich, dass beim Herstellen des Tanks bereits mindestens ein Modul in diesen eingebracht wird und zusätzliche Module nach Herstellung des Tanks und ggf. auch nach Anbringung einer besonderen Öffnung in der Tankwandung in den Tank eingebracht und mit dem darin bereits befindlichen Modul und/oder untereinander verbunden werden.

Das resultierende Reservoir wird im allgemeinen zu groß sein, als dass es durch die Öffnung in der Wandung des Tanks in diesen eingebracht werden könnte. Es wird somit im allgemeinen darauf ankommen, die Größe der einzelnen Module sowie deren Form so zu wählen, dass sie einerseits durch die Öffnung der Wandung des fertigen Tanks in diesen bzw. in den Vorformling, aus welchem der Tank hergestellt wird, eingeführt und sämtliche Module dann im Tank miteinander und mit der Tankwandung verbunden werden können. Dabei ist es nicht erforderlich, daß die Module in der Position des Reservoirs miteinander verbunden werden, die der Betriebsposition des Reservoirs entspricht.

Darüberhinaus kann es, insbesondere in Abhängigkeit von der Größe der einzelnen Module, zweckmäßig sein, diese mit Einbauten zu versehen, um zu verhindern, daß bei längeren Kurvenfahrten oder bei schräger Position des Fahrzeuges der Kraftstoff sich in kurzer Zeit z. B. im zuunterst befindlichen Bereich des jeweiligen Moduls sammelt. In dem die Kraftstoffpumpe aufnehmenden Modul wird normalerweise durch die Pumpe und die zugehörigen Teile ohnehin eine labyrinthartige Geometrie geschaffen, die es verhindert, daß dieses Modul bei den vorgenannten Betriebszuständen in kürzester Zeit leerläuft.

Das Befüllen der Module kann über eine Kraftstoffpumpe erfolgen, die zweistufig ausgebildet sein kann, wobei die erste Stufe dem Befüllen des Reservoirs dient und die zweite Stufe den Motor mit Kraftstoff aus dem Reservoir versorgt. Es können aber auch eine einstufige motorisch angetriebene Pumpe und wenigstens eine Saugstrahlpumpe vorgesehen sein, mittels welcher das Reservoir gefüllt wird. Letzteres, d.h., die es bildenden Module sind vorteilhafterweise so abgedichtet, daß bei Stillstand der Pumpe(n) möglichst kein Kraftstoff aus dem Reservoir in den es umgebenden Raum des Tankes fließt.

Ferner kann es zweckmäßig sein, wenigstens einen Teil der Module oberseitig bis auf einen kleinen Durchgang zu verschließen, um so zu verhindern, daß Kraftstoff in größeren Mengen oben aus dem jeweiligen Modul herausschwappt.

Es ist ferner möglich, den Modulen unterschiedliche Funktionen zuzuordnen derart, daß beispielsweise wenigstens ein Modul als Kraftstoff-Filter ausgebildet bzw. mit einem solchen versehen ist. Ferner besteht die Möglichkeit, wenigstens einem der Module eine Einrichtung zur Messung des Füllstandes im Tank oder ggf. auch in einem der Module zuzuordnen. Beschaffenheit und Positionierung der Verbindungen zwischen den einzelnen Modulen können unterschiedlich ausgebildet sein derart, daß sie jeweils an die Funktionen angepaßt sind.

In der Zeichnung sind einige Ausführungsbeispiele der Erfindung dargestellt. Es zeigen:
- Fig. 1: die Schemadarstellung eines Kraftstofftankes mit darin befindlichem, mehrteiligem Reservoir,
- Fig. 2A: eine weitere Ausführungsform eines Reservoirs in Seitenansicht,
- Fig. 2B: die dazugehörige Draufsicht,
- Fig. 2C: einen Schnitt nach der Linie 2C-2C der Fig. 2B,
- Fig. 2D: eine perspektivische Ansicht des Reservoirs,
- Fig. 3A: die Seitenansicht einer dritten weiteren Ausführungsform eines Reservoirs,
- Fig. 3B: die zugehörige Draufsicht,
- Fig. 3C: die zugehörige Vorderansicht,
- Fig. 3D: einen Schnitt nach der Linie 3D-3D der Fig. 3B.
- Fig. 4A: in größerem Maßstab zwei miteinander zu verbindende Module eines Reservoirs in einem Zwischenzustand während des Verbindungsvorganges,
- Fig. 4B: einen Schnitt nach der Linie 4B-4B der Fig. 4A,
- Fig. 4C: einen Schnitt nach der Linie 4C-4C der Fig. 4A,
- Fig. 4D: einen Schnitt nach der Linie 4D-4D der Fig. 4C,
- Fig. 4E: die beiden in Fig. 4A dargestellten Module in miteinander verbundenem Zustand,
- Fig. 4F: einen Schnitt nach der Linie 4F-4F der Fig. 4E,
- Fig. 5A: die Stirnansicht eines der äußeren Module des Ausführungsbeispiels gemäß den Fig. 3A bis 3D,
- Fig. 5B: die dazugehörige Draufsicht.

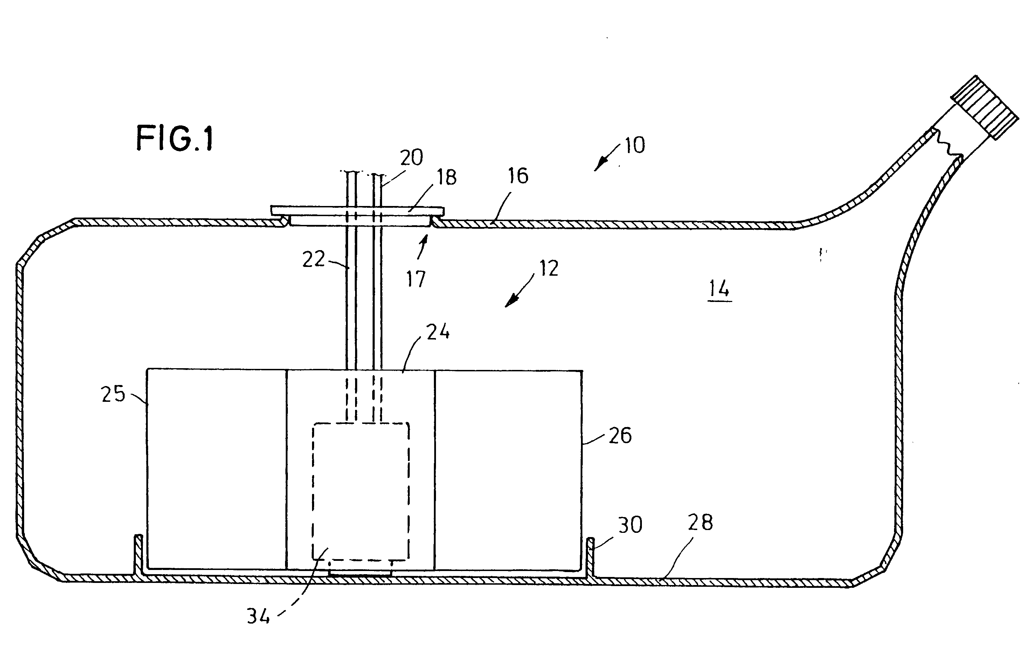

Der Grundgedanke der Erfindung wird zunächst anhand der Fig. 1 erläutert, welche eine sehr schematische Darstellung eines in ein Kraftfahrzeug einzubauenden Kraftstofftanks 10 im Längsschnitt zeigt. Fig. 1 zeigt nur die Teile, die für die Erfindung wesentlich sind.

Innerhalb des Kraftstofftanks 10 ist ein als Reservoir 12 dienendes Behältersystem angeordnet, welches aus dem es umgebenden Raum 14 innerhalb des Tankes 10 mittels wenigstens einer Pumpe Kraftstoff erhält, andererseits gegenüber dem Raum 14 so abgedichtet ist, daß, wenn überhaupt, nur sehr wenig Kraftstoff pro Zeiteinheit aus dem Reservoir 12 in den umgebenden Raum 14 ausfließen kann. Die Hauptfunktion des Reservoirs 12, innerhalb dessen die Kraftstoffpumpe, mittels welcher auch der Motor mit Kraftstoff versorgt wird, angeordnet ist, besteht darin, unter allen möglichen Betriebsbedingungen eine Kraftstoffmenge im Bereich der Ansaugöffnung der Pumpe zu halten, die ausreicht, um auch unter extremen Betriebsbedingungen, beispielsweise extremer Schräglagen des Fahrzeuges, die Versorgung der Pumpe und damit des Motors mit Kraftstoff zu gewährleisten.

Die Wandung 16 des Tankes 10 ist mit einer Öffnung 17 versehen, die durch einen Verschluß beispielsweise in Form eines Deckels 18 verschließbar ist. Durch den Deckel 18 ist die Leitung 20 hindurchgeführt, durch welche der Motor des Fahrzeugs von der im Reservoir 12 befindlichen Kraftstoffpumpe versorgt wird. Die elektrischen Leitungen 22 für den Motor der Kraftstoffpumpe sind ebenfalls durch den Deckel 18 hindurchgeführt.

Fig. 1 läßt erkennen, daß die Abmessungen des Reservoirs 12 in seiner Gesamtheit größer sind als die der Öffnung 17 in der Tankwandung 16. Aus diesem Grunde besteht die Notwendigkeit, das Reservoir 12 aus mehreren Einzelteilen oder Modulen, die getrennt durch die Öffnung 17 in den Tank 10 eingeführt werden und innerhalb des Tankes miteinander verbunden werden, zusammenzusetzen. Das Ausführungsbeispiel gemäß Fig. 1 weist drei solcher Module auf, von denen das erste Modul 24, das sich in der Mitte befindet, die Kraftstoffpumpe enthält. Zweites Modul 25 und drittes Modul 26 sind an einander gegenüberliegenden Seiten des ersten Moduls 24 derart angeordnet und mit letzterem verbunden, daß alle drei Module 24, 25, 26 das Behältersystem 12 bilden, welches als Reservoir und Schwallbehälter dient.

Jedes der Module 24, 25, 26 muß so dimensioniert sein, daß es durch die Öffnung 17 in der Tankwandung 16 hindurchführbar ist, wobei ggf. in Abhängigkeit von den Raumverhältnissen die Notwendigkeit besteht, zunächst alle Module in den Tank 10 einzubringen, bevor sie dann zusammengesetzt werden können. Es liegt auf der Hand, daß auf diese Weise ein Reservoir innerhalb des Tankes 10 vorgesehen sein kann, welches das mehrfache Volumen eines Reservoirs aufweist, welches lediglich aus einem Teil besteht, dessen Volumen durch die Größe der Öffnung 17 in der Tankwandung bestimmt ist.

Möglichkeiten der Verbindung der einzelnen Module miteinander werden im Zusammenhang mit den folgenden Ausführungsbeispielen beschrieben. Fig. 1 läßt erkennen, daß die Bodenwandung 28 des Tanks 10 mit einer vorzugsweise umlaufenden Halterung 30 versehen sein kann, durch welche die Position des Behältersystems 12 bestimmt wird, wobei diese Halterung 30 auch dazu beiträgt, die Module in ihrer Betriebslage zu halten.

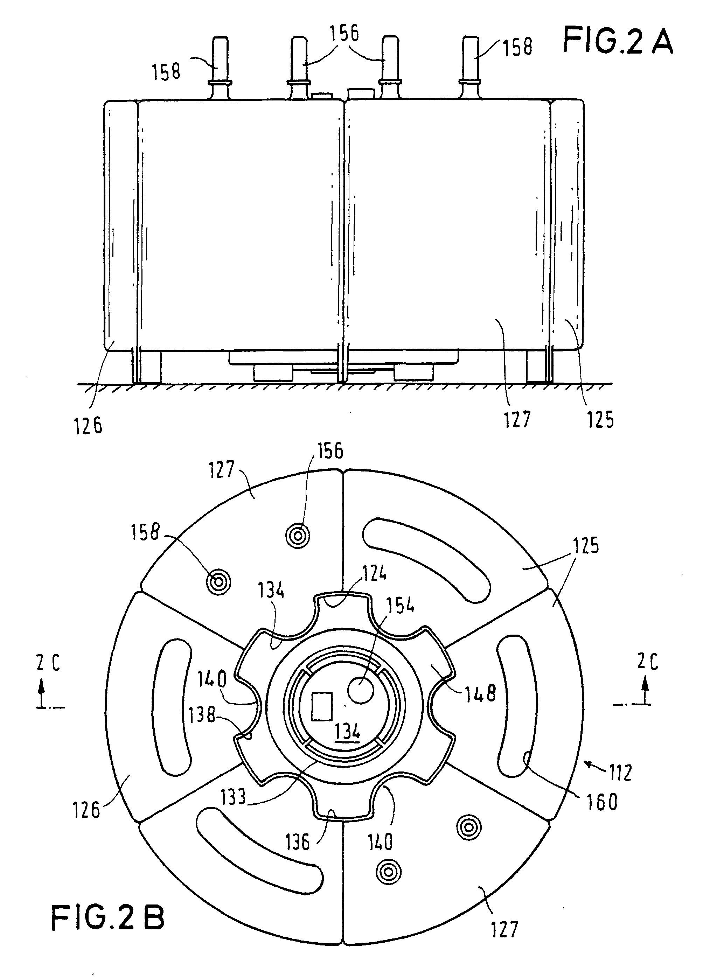

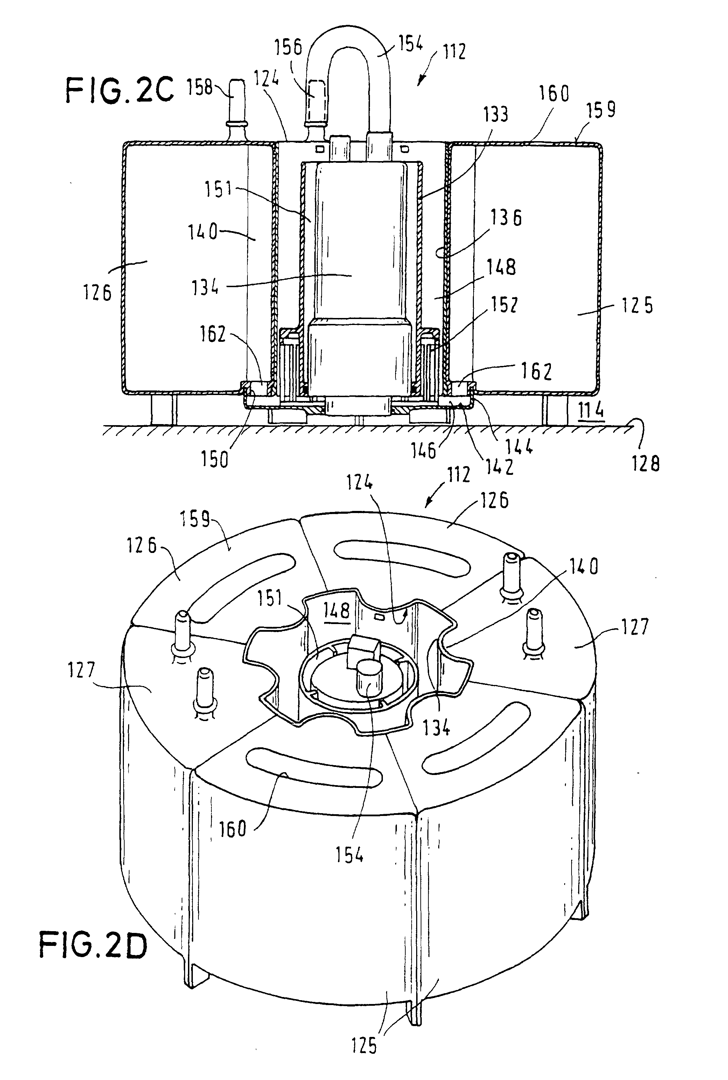

Die Fig. 2A bis 2D zeigen ein Reservoir 112 in Form eines Behältersystems, bei welchem mehrere Module kreisförmig um ein zentrales Modul 134 angeordnet sind. Der grunddsätzliche Aufbau stimmt mit dem der Fig. 1 überein, so daß einander entsprechende Teile auch mit gleichen Bezugszeichen versehen sind, die bei der Ausführungsform gemäß den Fig. 2A bis 2D jedoch um 100 höher sind als in Fig. 1.

Das zentrale Modul 124, welches mit der innerhalb eines Rohres 133 angeordneten zweistufigen Kraftstoffpumpe 134 versehen ist, weist eine umlaufende Begrenzungswand 136 auf, die mit über den Umfang in regelmäßigen Abständen angeordneten, parallel zur Längsachse des Reservoirs verlaufenden Einziehungen 138 versehen ist, in welche jeweils der entsprechend geformte Vorsprung 140 eines der das zentrale Modul 124 umgebenden sechs Module 125, 126, 127 eingreift, um so jedenfalls eine in Umfangsrichtung des Behältersystems 112 wirkenden Formschluß herbeizuführen.

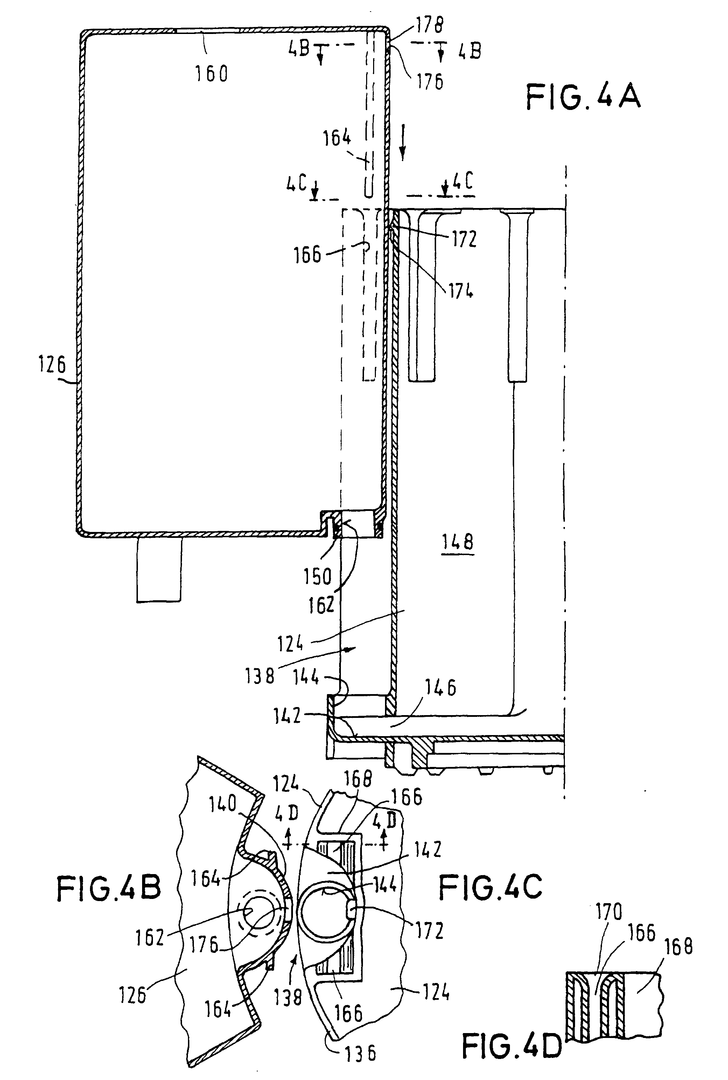

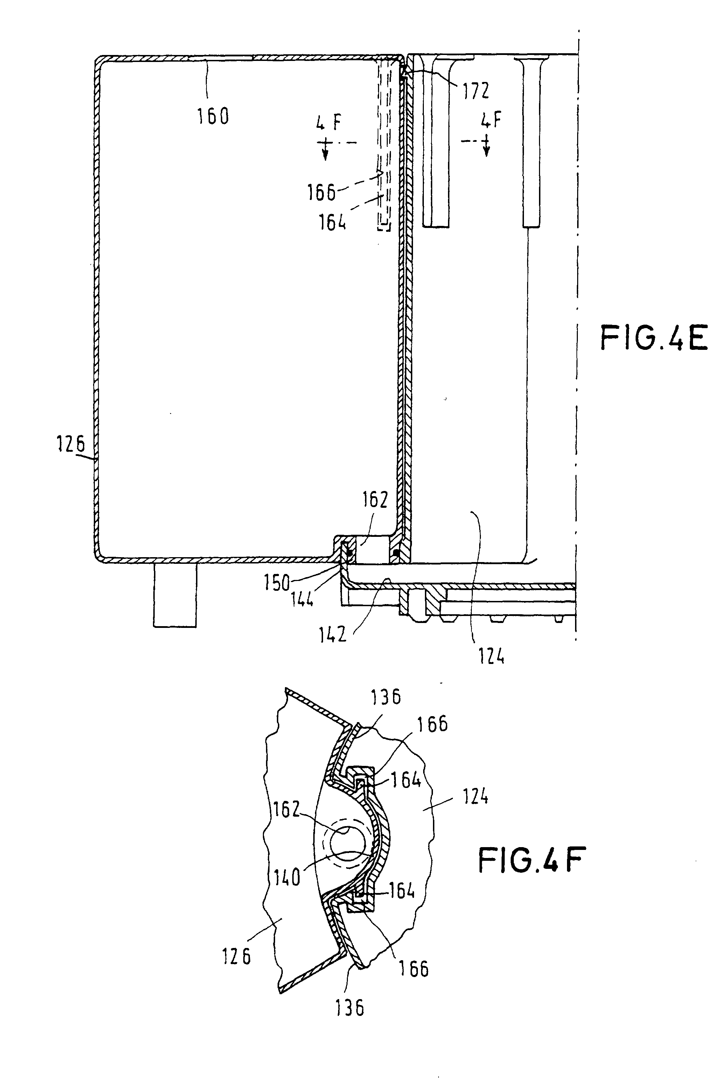

Einzelheiten bezüglich der Verbindungen zwischen den einzelnen Modulen sind in den Fig. 4A bis 4F dargestellt. Um die Anbringung der äußeren Module am zentralen Modul 124 zu sichern, ist jedes der äußeren Module 125, 126, 127 an jeder seitlichen Begrenzungswand des Vorsprunges 140 mit einer im wesentlichen parallel zur Längsachse des zentralen Moduls verlaufenden Rippe 164 versehen, die in montiertem Zustand der Teile in eine entsprechende Nut 166 am zentralen Modul 124 eingreift. Letzteres ist dazu im oberen Bereich der Einziehung 138 beidseitig mit jeweils einem Ansatz 168 (Fig. 4C) versehen, innerhalb dessen die Nut 166 angeordent ist, die sich, wie auch die Rippen 164, nur über einen Teil der Höhe des Moduls erstreckt (Fig. 4A). Da das äußere Modul, wie in Fig. 4A dargestellt, von oben relativ in das zentrale Modul 124 eingeschoben wird, ist jede Nut 166 oben mit einer Erweiterung 170 (Fig. 4D) versehen, um das Einführen der Rippe 164 des jeweiligen äußeren Moduls in die Nut 166 der zugehörigen Einziehung 138 zu erleichtern.

Am oberen Ende jeder Einziehung 138 ist am zentralen Modul ein abgeschrägter Vorsprung 172 vorgesehen, der, da normalerweise zumindest das zentrale Modul aus Kunststoff hergestellt ist, eine gewisse elastische Nachgiebigkeit aufweist, so daß beim Einführen des jeweiligen äußeren Moduls in die zugehörige Einziehung 138 des zentralen Moduls dieser Vorsprung 172 und/oder die ihn tragende Wand eine Verformung erfährt und, nachdem eine obere Begrenzungsfläche und/oder -kante, die mit dem Vorsprung 172 zusammenwirkt, dessen Anschlagfläche 174 passiert hat, wieder in seine Ausgangslage zurückfedert und sich über die Fläche oder Kante des äußeren Moduls legt und dieses somit in seiner Betriebslage arretiert. Zur Bildung der Begrenzungskante 176, die hinter den Vorsprung 172 greift, ist das jeweilige Modul 125, 126, 126 mit einer Durchbrechung 178 in seiner Wandung versehen.

Die Einziehungen 138 des zentralen Moduls 124 sind unterseitig jeweils durch einen Wandbereich 142 begrenzt, der oberseitig mit einem ringförmigen Sitz 144 versehen ist, in den ein entsprechend dimensionierter, am unteren Bereich des jeweiligen äußeren Moduls 125, 126, 127 angebrachter stutzenförmiger Fortsatz 150 zur Herstellung einer Steckverbindung einsteckbar ist.

Über einen Kanal 146 am unteren Wandbereich 142 wird die Verbindung zwischen dem Innenraum 148 des zentralen Moduls 124 und dem vom stutzenförmigen Fortsatz 144 umschlossenen Durchgang 162 und damit dem Innenraum des jeweils angeschlossenen äußeren Moduls hergestellt.

Das Einstecken des stutzenförmigen Fortsatzes 150 des jeweiligen Moduls erfolgt gleichzeitig mit dem Einschieben der Rippen 164 in die Nuten 166 (Fig. 4A), so daß jedes der äußeren Module in montiertem Zustand der Teile unten und oben formschlüssig mit dem zentralen Modul 124 verbunden ist. Dabei kann zwischen Sitz 144 und stutzenartigem Fortsatz 150 wenigstens ein Dichtring, beispielsweise ein O-Ring, vorgesehen sein, um eine völlige Dichtheit zu gewährleisten, wenngleich dies nicht unbedingt erforderlich ist, da das Behältersystem sich innerhalb des Kraftstofftankes 10 befindet und geringfügige Leckverluste an den Verbindungen 144, 150 das einwandfreie Funktionieren des Behältersystems nicht beeinträchtigen würden.

Die beiden einander gegenüberliegenden Module 127 sind mit Filtereinrichtungen versehen, mittels welcher der diese Module durchfließende Kraftstoff gefiltert wird. Im Falle der zwischen den beiden Filter-Modulen 127 jeweils paarweise angeordneten Modulen 125, 126, denen bei dem in den Fig. 2A bis 2D dargestellten Ausführungsbeispiel lediglich die Funktion zukommt, das Volumen des Reservoirs zu vergrößern, wird über den Kanal 146 und den durch die beiden zusammenwirkenden Teile 144, 150 auch eine Verbindung zwischen dem Innenraum 148 des zentralen Moduls 124 und dem jeweiligen Modul 124, 125 hergestellt. Im Falle der beiden Filter-Module 127 ist der Durchgang vom Innenraum 148 des zentralen Moduls zum jeweiligen Filter-Modul 127 beispielsweise durch einen im stutzenförmigen Fortsatz 150 angebrachten Stopfen verschlossen.

Die erste Stufe der Kraftstoffpumpe 134 saugt den Kraftstoff aus dem unterhalb des Behältersystems 112 befindlichen Bereich des Raumes 114 und fördert diesen Kraftstoff durch den Ringraum 151 (Fig. 2C) zwischen dem Gehäuse der Kraftstoffpumpe 134 und dem Rohrabschnitt 133 nach oben, so daß der Kraftstoff am oberen Ende des Rohrs 133 in den Ringraum 148 zwischen Rohr 133 und Wandung 136 des zentralen Moduls 124 übertritt und von dort durch den Kanal 146 und den vom stutzenförmigen Fortsatz 150 begrenzten Durchgang 162 in das jeweilige Modul 125 bzw. 126 fließen kann. Die zweite Stufe der Kraftstoffpumpe 134 saugt den Kraftstoff aus dem unteren Bereich des zwischen Rohrabschnitt 133 und Wandung 136 befindlichen Ringraums 148 über eine erste Filtereinrichtung 152 an, die ebenfalls innerhalb des Ringraumes 148 angeordnet ist. Die Ableitung 154 der Pumpe 134 ist mit der Zuleitung 156 wenigstens eines der beiden Filter-Module 127 verbunden. Der Kraftstoff verläßt das Filter-Modul nach Durchlaufen derselben durch die Ableitung 158, die zum Motor führt. Da zwei Filter-Module vorhanden sind, kann der von der Pumpe 134 kommende Kraftstoff auf zwei Filter-Module aufgeteilt werden, um die Filterfläche zu vergrößern, wobei die aus den beiden Filter-Modulen 127 kommenden Kraftstoffströme zusammengeführt und als einziger resultierender Strom zum Motor fließen. Es ist aber auch möglich, die beiden Filter-Module 127 in Reihe zu schalten, so daß der die Kraftstoffpumpe 134 durch die Ableitung 154 verlassende Kraftstoffstrom beide Module durchläuft. Dazu wären die Zu- und Ableitungen 156 bzw. 154 beider Filter-Module in geeigneter Weise miteinander zu verbinden.

Da die erste Stufe der Pumpe 134 normalerweise mehr Kraftstoff fördert als von der zweiten Stufe der Pumpe angesaugt wird, fließt ein Teil des den Innenraum 148 durchströmenden Kraftstoffes in die Reservoir-Module 125, 126, die somit bei normalen Betriebsbedingungen mehr oder weniger vollständig gefüllt sind, wobei überschüssiger Kraftstoff durch die in der oberen Abdeckung 159 angeordnete Überlauföffnungen 160 in den Innenraum 114 gelangt. Aufgrund der Tatsache, daß der vom stutzenförmigen Fortsatz 150 des jeweiligen Reservoir-Moduls 125 bzw. 126 begrenzte Durchgang 162 nur einen kleinen Querschnitt aufweist, ist auch bei extremen Betriebsbedingungen des Fahrzeugs, beispielsweise bei extremer Schrägstellung, bei welcher die erste Stufe der Pumpe möglicheweise keinen Kraftstoff mehr aus dem Raum 114 ansaugt, gewährleistet, daß ein ausreichender Kraftstoffvorrat für die zweite Stufe der Pumpe im Ansaugbereich derselben vorhanden ist. Die Unterteilung des das Reservoir darstellenden Behältersystems 112 in mehrere Reservoir-Module reduziert das Risiko, daß trotz der großen Ausdehnung des Behältersystems 112 der darin befindliche gesamte Kraftstoff sich bei Schrägstellung oder extremer Kurvenfahrt in einem Abschnitt des Reservoirs sammelt, der außerhalb der Saugwirkung der zweiten Stufe der Pumpe liegt. Abgesehen von der überlauföffnung 160 sind keine anderen Öffnungen vorhanden, durch welche Kraftstoff aus den sektorförmigen Reservoir-Modulen auslaufen könnte. Auf Grund der Tatsache, daß die Module oberseitig durch die Abdeckungen 159 weitestgehend verschlossen sind, kann auch bei extremer Schräglage des Fahrzeugs oberseitig kein Kraftstoff austreten, wenn die Module nicht vollständig gefüllt sind, zumal die Überlauföffnungen 160 in der Abdeckung 159 des jeweiligen Moduls im mittleren Bereich zwischen den beiden Umfangsbegrenzungen des jeweiligen Moduls angeordnet sind.

Im übrigen ist es möglich, die einzelnen Module noch mit zusätzlichen Einbauten zu versehen, um eine Labyrinthgeometrie innerhalb der einzelnen Module zu erzielen, die die Bewegungen des darin befindlichen Kraftstoffes zusätzlich verlangsamt und verhindert, daß sich bei Schräglage der Kraftstoff in kurzer Zeit in einem kleineren Bereich des jeweiligen Moduls sammelt. Bei den in der Zeichnung dargestellten Ausführungsbeispielen ist das zentrale Modul ohnehin mit so viel Einbauten versehen, daß sich zwangsläufig eine Labyrinthgeometrie ergibt.

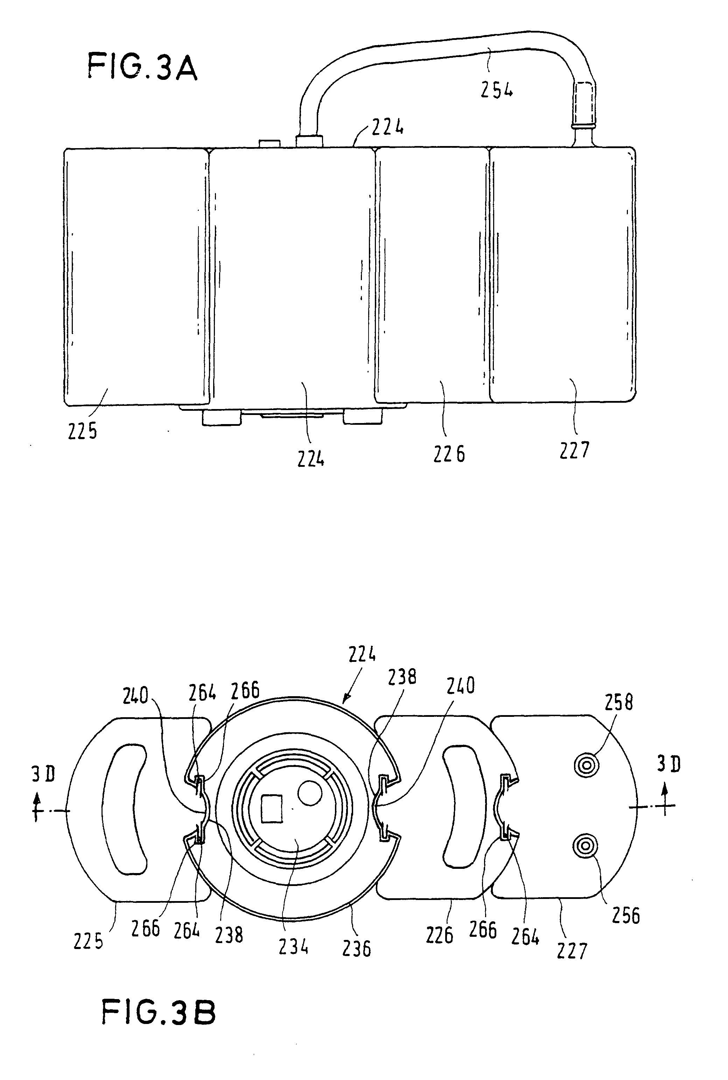

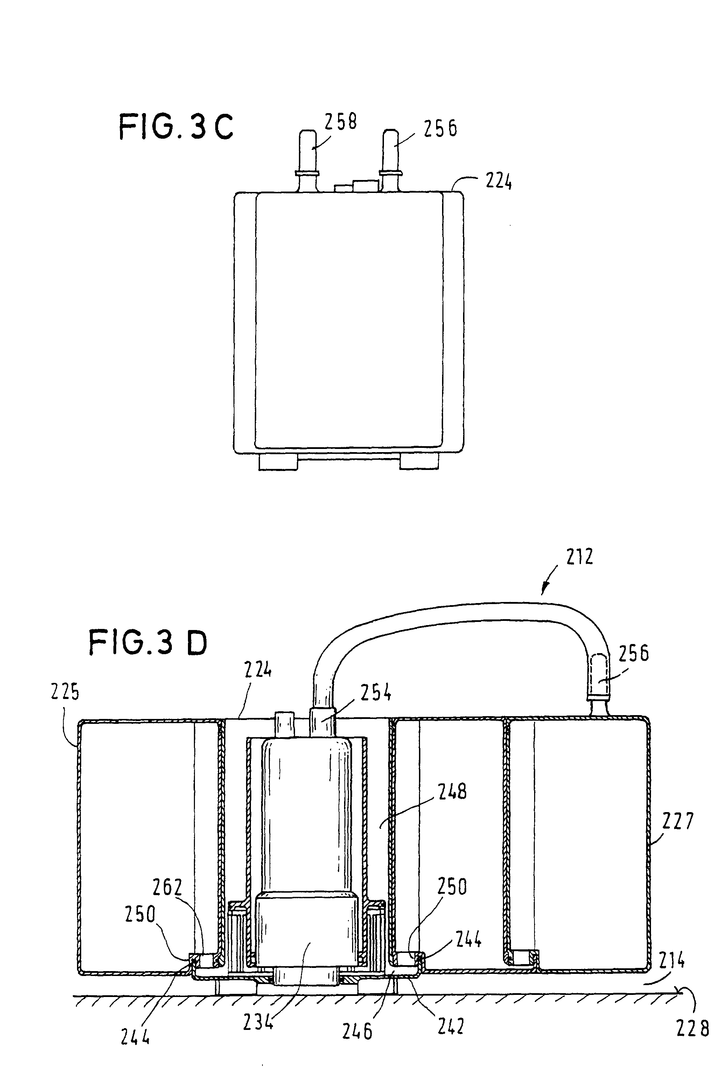

Letzteres gilt auch für das Ausführungsbeispiel gemäß den Fig. 3A bis 3D, das sich von dem der Fig. 2A bis 2D im wesentlichen dadurch unterscheidet, daß die einzelnen Module in Reihe angeordnet sind. Mit der Ausführungsform gemäß den Fig. 2A bis 2D übereinstimmende Teile werden deshalb mit den gleichen, jedoch um jeweils loo höheren Bezugszeichen versehen.

Das die Kraftstoffpumpe 234 aufweisende erste Modul 224 ist an seiner im übrigen im wesentlichen zylindrischen Wandung mit zwei Einziehungen 238 versehen, die vertikal verlaufen und um 180° gegeneinander versetzt angeordnet sind. Dem die Pumpe 234 enthaltenden Modul sind zwei entsprechend den Einziehungen 238 einander gegenüberliegend angeordnete Reservoir-Module 225 und 226 zugeordnet, die an ihrer jeweils dem ersten Modul 224 zugeordneten Seite mit jeweils einem Vorsprung 240 versehen sind, der in montiertem Zustand der Teile in der bereits im Zusammenhang mit der Ausführungsform gemäß den Fig. 2A bis 2D beschriebenen Weise in die jeweils zugeordnete Einziehung 238 des ersten Moduls eingreift und so einen Formschluß bildet.

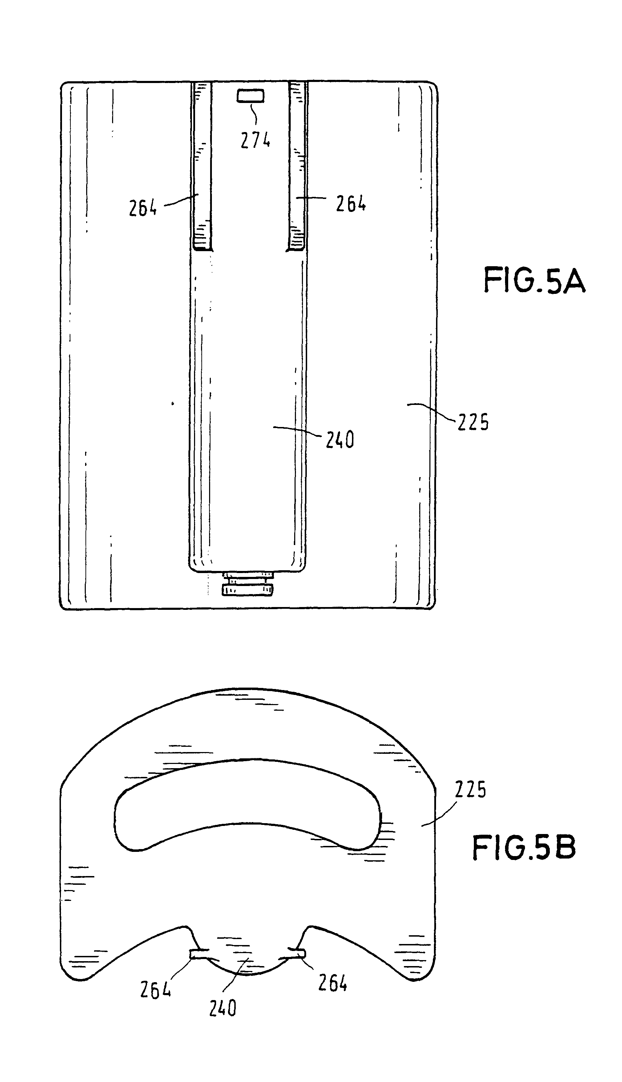

Die Verbindung der Module miteinander geschieht ebenfalls in der bereits im Zusammenhang mit den Fig. 2A bis 2D beschriebenen Weise. Die mit dem ersten Modul 234 unmittelbar verbundenen zusätzlichen Module 225, 226 sind an ihrem Vorsprung 240 an jeder Seite mit einer Rippe 264 (Fig. 5A, B) versehen, die in montiertem Zustand der Teile in analoger Weise in Nuten 266 eingreift, die im Bereich der jeweiligen Einziehung 238 am ersten Modul 224 angebracht sind.

Ferner ist das die Pumpe 234 aufweisende erste Modul 224 an seinem unteren Ende im Bereich der Einziehungen 238 in der ebenfalls bereits im Zusammenhang mit der Ausführungsform gemäß den Fig. 2A bis 2D beschriebenen Weise mit einem die Einziehung 238 unten begrenzenden Wandbereich 242 versehen, der oberseitig einen ringförmigen Sitz 244 aufweist, in den ein entsprechend dimensionierter, am unteren Bereich des jeweiligen Reservoir-Modul angebrachter stutzenförmiger Fortsatz 250 zur Herstellung einer Steckverbindung einsteckbar ist, wie dies insbesondere Fig. 3D der Zeichnung erkennen läßt. Ferner ist auch hier ein Kanal 246 vorgesehen, der gemeinsam mit dem Durchgang 262 im stutzenförmigen Fortsatz 250 eine Verbindung zwischen dem Innenraum der jeweiligen Reservoir-Modul 225 bzw. 226 einerseits und dem Innenraum 248 der ersten Modul 224 herstellt, das im übrigen dem zentralen Modul 124 entspricht.

An der dem ersten Modul 224 abgekehrten Seite des dritten Moduls 226 ist ein Filtermodul 227 angeordnet, das ebenfalls unter Verwendung von Rippen 264 und Nuten 266 an Vorsprung 240 bzw. Einziehung 238 einerseits und mittels einer in der vorbeschriebenen Weise ausgebildeten Steckverbindung mit dem zweiten Reservoir-Modul 226 verbunden ist, wobei kein Durchgang zwischen den beiden Modulen 226 und 227 vorgesehen ist.

Ferner ist auch hier die Anordnung so getroffen, daß die Ableitung 254 der zweiten Stufe der Kraftstoffpumpe 234 mit der Zuleitung 256 des Filter-Moduls 227 verbunden ist. Nach Durchströmen dieses Filtermoduls wird der gefilterte Kraftstoff aus der Ableitung 258 dem Motor zugeführt.

Bei beiden vorbeschriebenen Ausführungsbeispielen sind die einzelnen Module als Behälter oder Kammern ausgebildet, die auch unabhängig davon, ob sie mit den anderen Modulen zu einem Behältersystem zusammengesetzt sind, Flüssigkeit aufzunehmen in der Lage sind. Es ist natürlich auch möglich, wenigstens einen Teil der Module so auszubilden, daß sie zumindest in dem Bereich, in welchem sie an ein benachbartes Modul angrenzen, offen, also ohne Wandung sind, wobei ein Wandbereich des jeweils anschließenden Moduls in montiertem Zustand der Teile den offenen Bereich des benachbarten Moduls verschließt und somit zwei Module einen gemeinsamen Wandbereich haben. Welchen der beiden Ausführungen der Vorzug gegeben wird, mag auch von der erforderlichen Paßgenauigkeit der zu verbindenden Module abhängen.

## Patentansprüche

1. Kraftstofftank für ein Kraftfahrzeug, der mit einem darin angeordneten Reservoir (12; 112; 212) versehen ist, das durch eine verschließbare Öffnung (17)in der Wandung (16) des Kraftstofftanks zugänglich ist, **dadurch gekennzeichnet**, das Reservoir (12; 112; 212) aus wenigstens zwei über Befestigungsmittel miteinander verbindbaren Modulen (24, 25, 26; 124, 125, 126, 127; 224, 225, 226, 227) besteht, wobei die Befestigungsmittel so ausgebildet sind, dass die Module bei ihrer Einbringung in den Tank entlang einer gemeinsamen Seite in einer Richtung verschiebbar und nach ihrer Einbringung in den Tank durch die Verschiebung ineinander einsteckbar sind.

2. Kraftstofftank nach Anspruch 1, **dadurch gekennzeichnet, dass** das Reservoir (112) mit einem zentralen Modul (124) versehen ist, entlang dessen Umfang mehrere Module (125, 126, 127) angeordnet sind.

3. Kraftstofftank nach Anspruch 1, **dadurch gekennzeichnet, dass** mehrere Module (24, 25, 26; 224, 225, 226, 227) im wesentlichen linear angeordnet sind.

4. Kraftstofftank nach Anspruch 1, **dadurch gekennzeichnet, dass** wenigstens ein Teil der das Reservoir (12; 112; 212) bildenden Module (24, 25, 26; 124, 125, 126, 127; 224, 225, 226, 227) als Kammern ausgebildet ist.

5. Kraftstofftank nach Anspruch 1, **dadurch gekennzeichnet, dass** wenigstens zwei Module des Reservoirs durch einen gemeinsamen Wandbereich begrenzt sind.

6. Kraftstofftank nach Anspruch 1, **dadurch gekennzeichnet, dass** wenigstens ein Modul des Reservoirs bereits während der Herstellung des Kraftstofftanks in diesen eingebracht worden ist und wenigstens ein anderes Modul durch die verschließbare Öffnung in der Wandung des Kraftstofftanks in diesen eingebracht worden ist.

7. Kraftstofftank nach einem der vorhergehenden Ansprüche, **dadurch gekennzeichnet, dass** wenigstens eines (24; 124; 224) der Module eine Kraftstoffpumpe (34; 134; 234) enthält, durch welche der Kraftstoff dem Motor des Kraftfahrzeugs zugeführt wird.

8. Kraftstofftank nach Anspruch 1, **dadurch gekennzeichnet, dass** wenigstens eines (127; 227) der Module als Kraftstoff-Filter ausgebildet oder mit einem solchen versehen ist.

9. Kraftstofftank nach Anspruch 1, **dadurch gekennzeichnet, dass** wenigstens ein Teil der Module oberseitig mit einer Abdeckung (159) versehen ist.

10. Kraftstofftank nach Anspruch 9, **dadurch gekennzeichnet, dass** die Abdeckung mit einem kleinen Durchgang (160) für den Kraftstoff versehen ist.

11. Kraftstofftank nach Anspruch 1, **dadurch gekennzeichnet, dass** wenigstens eines der Module innenseitig mit z. B. labyrinthartigen Einbauten versehen ist, die das Strömen des Kraftstoffs verlangsamen.

12. Kraftstofftank nach Anspruch 1, **dadurch gekennzeichnet, dass** das Reservoir ganz oder überwiegend aus thermoplastischem Kunststoff besteht.

13. Kraftstofftank nach Anspruch 1, **dadurch gekennzeichnet, dass** am Boden (28) des Kraftstofftanks (16) ein Sitz (30) für das Reservoir (12) angebracht ist.

14. Kraftstofftank nach Anspruch 1, **dadurch gekennzeichnet, dass** eine zweistufige Kraftstoffpumpe (134) vorgesehen ist, deren erste Stufe auch dazu dient, die Module (125, 126) mit Kraftstoff zu versorgen.

15. Kraftstofftank nach Anspruch 1, **dadurch gekennzeichnet, dass** von zwei miteinander zu verbindenden Modulen (124; 224) eines an seinem Umfangsbereich mit einer Einziehung (138; 238) und das andere Modul (125, 126, 127; 225, 226, 227) mit einem entsprechend geformten Vorsprung (140; 240) versehen ist, der in montiertem Zustand der Teile in die Einziehung eingreift.

16. Kraftstofftank nach Anspruch 15, **dadurch gekennzeichnet, dass** ein eine Einziehung (138; 238) aufweisendes Modul (124; 224) im Bereich der Einziehung mit wenigstens einer Nut (166; 266) versehen ist und der in die Ausnehmung (138; 238) eingreifende Vorsprung (140; 240) des jeweils anderen Moduls (125, 126, 127; 225, 226, 227) mit wenigstens einem Fortsatz (164; 264) versehen ist, der in montiertem Zustand der Module in die wenigstens eine Nut (166; 266) eingreift.

17. Kraftstofftank nach Anspruch 16, **dadurch gekennzeichnet, dass** zwei parallele Nuten (166; 266) vorgesehen sind und jeder Nut am jeweils anderen Modul wenigstens ein Fortsatz (164; 264) zugeordnet ist.

18. Kraftstofftank nach Anspruch 15, **dadurch gekennzeichnet, dass** die Einziehung (138; 238) unterseitig von einem Boden (142, 242) begrenzt ist und oberhalb desselben ein Sitz (144; 244) vorgesehen ist, in den in montiertem Zustand der Module ein Kupplungsteil (150; 250) eingreift, dessen Außenquerschnitt an den Innenquerschnitt des Sitzes angepasst ist.

19. Kraftstofftank nach Anspruch 18, **dadurch gekennzeichnet, dass** der vom Sitz (144; 244) umschlossene Raum über einen am Boden (142; 242) befindlichen Kanal (146; 246) mit dem Inneren des zugehörigen Moduls (124; 224) verbunden ist und das Kupplungsteil (150; 250) des anderen Moduls (125, 126, 127; 225, 226, 227) als Stutzen ausgebildet ist, der einen Durchgang (162; 262) begrenzt, der mit dem Innenraum des anderen Moduls verbunden ist.

20. Kraftstofftank nach Anspruch 15, **dadurch gekennzeichnet, dass** die Module (124, 125, 126, 127) in montiertem Zustand durch eine Schnapp- oder Rastverbindung (172, 176) in ihrer Betriebslage gehalten werden.

21. Kraftstofftank nach Anspruch 20, **dadurch gekennzeichnet, dass** nahe dem dem Sitz abgekehrten Ende der Einziehung am Modul (124) ein Anschlag (172) angebracht ist, welcher in montiertem Zustand der Teile einen Bereich (176) des jeweils anderen Moduls (125, 126, 127) übergreift, um dieses in seiner Lage zu sichern, wobei Anschlag (172) und/oder das ihn tragende Modul (124) sowie wenigstens der Bereich des jeweils anderen Moduls (125, 126, 127), welcher mit dem Anschlag (172) zusammenwirkt, elastisch nachgiebig ausgebildet sind.

## Claims

1. A fuel tank for a motor vehicle, which is provided with a reservoir (12; 112; 212) which is arranged therein and which is accessible through a closable opening (17) in the wall (16) of the fuel tank, **characterized in that** the reservoir (12; 112; 212) is composed of at least two modules (24, 25, 26; 124, 125, 126, 127; 224, 225, 226, 227) which can be connected together by way of fixing means, wherein the fixing means are so designed that the modules are displaceable upon being introduced into the tank along a common side in one direction and after having been introduced into the tank can be inserted one into the other by the displacement.

2. A fuel tank according to claim 1 **characterized in that** the reservoir (112) is provided with a central module (124), along the periphery of which are arranged a plurality of modules (125, 126, 127).

3. A fuel tank according to claim 1 **characterized in that** a plurality of modules (24, 25, 26; 224, 225, 226, 227) are arranged substantially linearly.

4. A fuel tank according to claim 1 **characterized in that** at least a part of the modules (24, 25, 26; 124, 125, 126, 127; 224, 225, 226, 227) forming the reservoir (12; 112; 212) are in the form of chambers.

5. A fuel tank according to claim 1 **characterized in that** at least two modules of the reservoir are delimited by a common wall region.

6. A fuel tank according to claim 1 **characterized in that** at least one module of the reservoir has already been inserted into the fuel tank during production thereof and at least one other module has been inserted into the fuel tank through the closable opening in the wall of the fuel tank.

7. A fuel tank according to one of the preceding claims **characterized in that** at least one (24; 124; 224) of the modules includes a fuel pump (34; 134; 234) by which the fuel is fed to the engine of the motor vehicle.

8. A fuel tank according to claim 1 **characterized in that** at least one (127; 227) of the modules is in the form of a fuel filter or is provided with such a fuel filter.

9. A fuel tank according to claim 1 **characterized in that** at least a part of the modules are provided at the top side with a cover (159).

10. A fuel tank according to claim 9 **characterized in that** the cover is provided with a small orifice (160) for the fuel.

11. A fuel tank according to claim 1 **characterized in that** at least one of the modules is internally provided with for example labyrinth-like internal fitments which slow down the flow of the fuel.

12. A fuel tank according to claim 1 **characterized in that** the reservoir entirely or predominantly comprises thermoplastic material.

13. A fuel tank according to claim 1 **characterized in that** a seat (30) for the reservoir (12) is provided at the bottom (28) of the fuel tank (16).

14. A fuel tank according to claim 1 **characterized in that** there is provided a two-stage fuel pump (134) whose first stage also serves to supply the modules (125, 126) with fuel.

15. A fuel tank according to claim 1 **characterized in that** of two modules (124; 224) which are to be connected together one is provided at its peripheral region with a recess (138; 238) and the other module (125, 126, 127; 225, 226, 227) is provided with a correspondingly shaped projection (140; 240) which in the assembled condition of the parts engages into the recess.

16. A fuel tank according to claim 15 **characterized in that** a module (124; 224) having a recess (138; 238) is provided with at least one groove (166; 266) in the region of the recess and the projection (140; 240) of the respective other module (125, 126, 127; 225, 226, 227), which engages into the recess (138; 238), is provided with at least one extension (164; 264) which in the assembled condition of the modules engages into the at least one groove (166; 266).

17. A fuel tank according to claim 16 **characterized in that** there are provided two parallel grooves (166; 266) and at least one extension (164; 264) is associated with each groove on the respective other module.

18. A fuel tank according to claim 15 **characterized in that** the recess (138; 238) is delimited at the bottom end by a bottom (142; 242) and provided above the bottom is a seat (144; 244) into which a coupling portion (150; 250) engages in the assembled condition of the modules, the external cross-section of said coupling portion being adapted to the internal cross-section of the seat.

19. A fuel tank according to claim 18 **characterized in that** the space enclosed by the seat (144; 244) is connected by way of a passage (146; 246) on the bottom (142; 242) to the interior of the associated module (124; 224) and the coupling portion (150; 250) of the other module (125, 126, 127; 225, 226, 227) is in the form of a stub connection delimiting a duct (162; 262) which is connected to the interior of the other module.

20. A fuel tank according to claim 15 **characterized in that** the modules (124, 125, 126, 127) are held in their operative position in the assembled condition by a snap-action or detent connection (172, 176).

21. A fuel tank according to claim 20 **characterized in that** disposed near the end of the recess, which is remote from the seat, on the module (124) is an abutment (172) which in the assembled condition of the parts engages over a region (176) of the respective other module (125, 126, 127) in order to secure same in its position, wherein the abutment (172) and/or the module (124) carrying it and at least the region of the respective other module (125, 126, 127) which co-operates with the abutment (172) are of an elastically yielding nature.

## Revendications

1. Réservoir de carburant pour un véhicule, équipé d'un réservoir (12 ; 112 ; 212) logé à l'intérieur, accessible par un orifice (17) situé dans la paroi (16) du réservoir de carburant et pouvant être fermé ; **caractérisé en ce que** le réservoir (12 ; 112 ; 212) est constitué d'au moins deux modules (24, 25, 26 ; 124, 125, 126, 127 ; 224, 225, 226, 227) qui peuvent être reliés entre eux par des moyens de fixation, les moyens de fixation étant conçus de manière à ce qu'au moment de leur introduction dans le réservoir de carburant, les modules puissent être déplacés dans un sens, le long d'un côté commun, et qu'ils puissent s'enclencher l'un dans l'autre après leur introduction dans le réservoir de carburant, grâce à ce déplacement.

2. Réservoir de carburant selon la revendication 1, **caractérisé en ce que** le réservoir (112) est équipé d'un module central (124) sur le pourtour duquel sont agencés plusieurs modules (125, 126, 127).

3. Réservoir de carburant selon la revendication 1, **caractérisé en ce que** plusieurs modules (24, 25, 26 ; 224, 225, 226, 227) ont une disposition essentiellement linéaire.

4. Réservoir de carburant selon la revendication 1, **caractérisé en ce qu'**au moins une partie des modules (24, 25, 26 ; 124, 125, 126, 127 ; 224, 225, 226, 227) constituant le réservoir (12 ; 112 ; 212) est conçue comme chambre.

5. Réservoir de carburant selon la revendication 1, **caractérisé en ce qu'**au moins deux modules du réservoir sont délimités par une zone de paroi commune.

6. Réservoir de carburant selon la revendication 1, **caractérisé en ce qu'**au moins un module du réservoir a été introduit, dès l'étape de fabrication du réservoir de carburant, dans ce dernier, et qu'au moins un autre module y a été introduit par l'orifice situé dans la paroi du réservoir de carburant et pouvant être fermé.

7. Réservoir de carburant selon l'une des revendications précédentes, **caractérisé en ce qu'**au moins l'un des modules (24 ; 124 ; 224) contient une pompe à carburant (34 ; 134 ; 234) par laquelle le carburant est dirigé vers le moteur du véhicule.

8. Réservoir de carburant selon la revendication 1, **caractérisé en ce qu'**au moins l'un des modules (127 ; 227) est conçu comme filtre à carburant ou est équipé d'un filtre de ce type.

9. Réservoir de carburant selon la revendication 1, **caractérisé en ce qu'**au moins une partie des modules est équipée d'un couvercle (159) au niveau de son côté supérieur.

10. Réservoir de carburant selon la revendication 9, **caractérisé en ce que** le couvercle est pourvu d'un petit passage (160) pour le carburant.

11. Réservoir de carburant selon la revendication 1, **caractérisé en ce qu'**au moins l'un des modules est par exemple équipé, à l'intérieur, d'éléments formant labyrinthe qui ralentissent le flux de carburant.

12. Réservoir de carburant selon la revendication 1, **caractérisé en ce que** le réservoir est constitué en totalité ou en grande majorité de matériaux thermoplastiques.

13. Réservoir de carburant selon la revendication 1, **caractérisé en ce qu'**un logement (30) pour le réservoir (12) est fixé au niveau du fond (28) du réservoir de carburant (16).

14. Réservoir de carburant selon la revendication 1, **caractérisé en ce qu'**une pompe à carburant (134) à deux étages est prévue, son premier étage servant notamment à alimenter les modules (125, 126) en carburant.

15. Réservoir de carburant selon la revendication 1, **caractérisé en ce que** sur deux modules (124 ; 224) devant être reliés l'un à l'autre, l'un présente un évidement (138 ; 238) au niveau de sa circonférence, et l'autre module (125, 126, 127 ; 225, 226, 227) présente une saillie (140 ; 240) conçue de manière correspondante, qui s'emboîte dans l'évidement lorsque les parties sont montées.

16. Réservoir de carburant selon la revendication 15, **caractérisé en ce qu'**un module (124 ; 224) présentant un évidement (138 ; 238) est équipé, dans la zone de l'évidement, d'au moins une rainure (166 ; 266), et **en ce que** la saillie (140 ; 240) s'emboîtant dans l'évidement (138 ; 238) de l'autre module correspondant (125, 126, 127 ; 225, 226, 227) est équipée d'au moins un prolongement (164 ; 264), lequel s'enclenche, lorsque les modules sont montés, dans la au moins une rainure (166 ; 266).

17. Réservoir de carburant selon la revendication 16, **caractérisé en ce que** deux rainures parallèles (166 ; 266) sont prévues, et **en ce qu'**au moins un prolongement (164 ; 264) correspond à chaque rainure située au niveau de l'autre module correspondant.

18. Réservoir de carburant selon la revendication 15, **caractérisé en ce que** l'évidement (138 ; 238) est délimité au niveau de son côté inférieur par un fond (142, 242), et qu'au-dessus de ce dernier est prévu un logement (144 ; 244) dans lequel un élément d'assemblage (150 ; 250) vient s'emboîter, lorsque les modules sont montés, dont le diamètre extérieur est adapté au diamètre intérieur du logement.

19. Réservoir de carburant selon la revendication 18, **caractérisé en ce que** l'espace fermé par le logement (144 ; 244) est relié à l'intérieur du module correspondant (124 ; 224) par l'intermédiaire d'un canal (146 ; 246) situé au niveau du fond (142 ; 242), et **en ce que** l'élément d'assemblage (150 ; 250) de l'autre module (125, 126, 127 ; 225, 226, 227) est conçu comme un ajutage délimitant un passage (162 ; 262), lequel est relié à l'intérieur de l'autre module.

20. Réservoir de carburant selon la revendication 15, **caractérisé en ce que** les modules (124, 125, 126, 127), lorsqu'ils sont montés, sont maintenus en position de fonctionnement grâce à un assemblage par enclenchement ou encliquetage (172, 176).

21. Réservoir de carburant selon la revendication 20, **caractérisé en ce qu'**une butée (172) est fixée au niveau du module (124), près de l'extrémité de l'évidement située du côté opposé au logement, cette butée surplombant, lorsque les éléments sont montés, une zone (176) de l'autre module correspondant (125, 126, 127) afin de garantir le maintien de ce module dans sa position ; moyennant quoi la butée (172) et/ou le module (124) qui la supporte, de même qu'au moins la zone de l'autre module correspondant (125, 126, 127), laquelle est en interaction avec la butée (172), sont d'une conception élastique et souple.
